# EUROPEAN PATENT APPLICATION

(11) **EP 4 837 799 A1**
(43) Date of publication of application: **11.11.2026**
(21) Application number: 26159103.6
(22) Date of filing: 17.02.2026
(51) Int. Cl.: B60T 17/00, F16K 24/04, F21S 45/10, F21S 45/30

(54) **ADSORBENT SYSTEM**

(30) Priority: 17.02.2025 US 202563759313 P
(71) Applicant: Flow Dry Technology, Inc., Brookville, Ohio 45309 (US)
(72) Inventor: Dinkler, Charles Edgar, Oakwood, 45419 (US); White, Haley Elisa, Chicago, 6607 (US); Preseren, Igor, Ortonville, 48462 (US)
(74) Representative: Feder Walter Ebert

(57) **Abstract**

An adsorbent system including a valve assembly, the valve assembly having a body with or defining a channel therein. The valve assembly is configured to be coupled to an enclosure having a cavity defining a humidity-controlled environment such that a first end of the channel is in selective fluid communication with an ambient environment and a second end of the channel is in fluid communication with the humidity-controlled environment. The valve assembly includes an adsorbent material in the channel, wherein the channel and adsorbent material are configured such that fluid flowing through the channel is flowable over the adsorbent material. The valve assembly further includes a single valve membrane positioned at or adjacent to, or in fluid communication with, the first end of the channel. The valve membrane is configured to move to a first open position when there is a first predetermined pressure differential between the channel and the ambient environment, and is configured to move to a second open position, in an opposite direction compared to when the valve membrane is in the first open position, when there is a second predetermined pressure differential between the channel and the ambient environment. The system is configured such that at least one of: 1) the first and second predetermined pressure differentials are not equal; or 2) the valve membrane is configured to enable a greater volume of fluid to flow through the valve membrane at a given pressure when the valve is in the second open position as compared to when the valve membrane is in the first open position at the given pressure.

## Description

This application is directed to a regenerative adsorbent system, and more particularly, to an adsorbent system having a valve to control a flow of fluid through the system.

It is often desired to control the levels of moisture/humidity in enclosed spaces. For example, automobile or vehicle light or lamp assemblies (such as headlights, brake lights, turning signal lights, etc.) are typically generally sealed or enclosed. An excess buildup of moisture can compromise the appearance and/or functionality of the light.

In one embodiment the present invention is an adsorbent system that can help to control the levels of humidity. More particularly, in one embodiment the invention is an adsorbent system including a valve assembly, the valve assembly having a body with or defining a channel therein. The valve assembly is configured to be coupled to an enclosure having a cavity defining a humidity-controlled environment such that a first end of the channel is in selective fluid communication with an ambient environment and a second end of the channel is in fluid communication with the humidity-controlled environment. The valve assembly includes an adsorbent material in the channel, wherein the channel and adsorbent material are configured such that fluid flowing through the channel is flowable over the adsorbent material. The valve assembly further includes a single valve membrane positioned at or adjacent to, or in fluid communication with, the first end of the channel. The valve membrane is configured to move to a first open position when there is a first predetermined pressure differential between the channel and the ambient environment, and is configured to move to a second open position, in an opposite direction compared to when the valve membrane is in the first open position, when there is a second predetermined pressure differential between the channel and the ambient environment. The system is configured such that at least one of: 1) the first and second predetermined pressure differentials are not equal; or 2) the valve membrane is configured to enable a greater volume of fluid to flow through the valve at a given pressure when the valve membrane is in the second open position as compared to when the valve membrane is in the first open position at the given pressure.

According to a further embodiment, the first and second predetermined pressure differentials are not equal.

According to a further embodiment, the valve membrane is configured to enable a greater volume of fluid to flow through the valve at a given pressure when the valve is in the second open position as compared to when the valve is in the first open position at the given pressure.

According to a further embodiment, the valve assembly is configured such that when the valve membrane is in the first open position the valve membrane enables fluid to flow from the channel to the ambient environment, and wherein when the valve membrane is in the second open position the valve membrane enables fluid to flow from the ambient environment to the channel.

According to a further embodiment, the valve membrane is configured to enable a greater volume of fluid to flow through the valve membrane at a given pressure when the valve is in the second open position as compared to when the valve is in the first open position at the given pressure.

According to a further embodiment, the first open position is the greatest extent that the valve membrane can open in a first direction.

According to a further embodiment, the valve membrane is configured to move to the first open position when a pressure in the channel is sufficiently high relative to a pressure in the ambient environment, wherein the valve membrane is configured to move to the second open position when the pressure in the channel is sufficiently low relative to the pressure in the ambient environment, and wherein an absolute value of the first predetermined pressure is greater than an absolute value of the second predetermined pressure.

According to a further embodiment, the valve membrane is a single unitary structure having at least one slit formed therein, and wherein the valve assembly further includes a first support plate located on a first side of the valve membrane and a second support plate located on a second, opposite side of the valve membrane.

According to a further embodiment, each support plate has an opening formed therein that is at least partially aligned with the at least one slit of the valve membrane, and wherein the opening of the first support plate has at least one of a different size, shape or positioning relative to the at least one slit, as compared to the opening of the second support plate.

According to a further embodiment, each support plate has an opening formed therein that is at least partially aligned with the at least one slit of the valve membrane, and wherein the opening of the first support plate located adjacent to the membrane has a smaller surface area as compared to a surface area of the opening of the second support plate located adjacent to the membrane.

According to a further embodiment, at least one of the support plates is configured to engage a portion the valve membrane when the valve membrane is in one of the first or second open positions to limit the opening of the valve membrane.

According to a further embodiment, the other one of the support plates is configured to not engage a deflected portion of the valve membrane when the valve membrane is in the other one of the first or second open positions such that the other one of the support plates does not limit the opening of the valve membrane.

According to a further embodiment, the valve membrane is biased to a closed position where the valve membrane blocks fluid flow through the valve assembly.

According to a further embodiment, the valve assembly is positioned such that inlet fluid entering the body from the ambient environment passes through the valve membrane before flowing over the adsorbent material, and such that outlet fluid exiting the body to the ambient environment passes through the valve membrane before entering the ambient environment.

According to a further embodiment, the valve membrane is a passive valve that is automatically openable when a sufficient pressure differential exists thereacross.

According to a further embodiment, the adsorbent material is a particulate desiccant.

According to a further embodiment, comprising the enclosure, wherein the body is coupled to the enclosure such that the first end of the channel is in selective fluid communication with the ambient environment the second end of the channel is in fluid communication with the humidity-controlled environment, wherein the enclosure includes at least one device positioned in the cavity configured such that periodic operation of the device generates sufficient heat to cause regeneration of the adsorbent material.

According to a further embodiment, the enclosure is at least one of a vehicle headlamp assembly, an electrical cabinet or an electronics enclosure.

According to a further embodiment, the channel has a non-circular, non-regular polygon shape in cross section, and has the same cross sectional shape and size along an entire length thereof.

According to a further embodiment, the channel has, in cross section, a central hub and at least three petals extending radially outwardly from the central hub.

According to a further embodiment, the body is configured to be rotationally coupled to a port in the enclosure, wherein the system includes a supplemental valve assembly configured to be rotationally coupled to a port of a supplemental enclosure, wherein the body of the valve assembly is configured to not be rotationally coupled to the port of the supplemental enclosure, and wherein the body of the supplemental valve assembly is configured to not be rotationally coupled to the port of the enclosure.

According to a further embodiment, the body of the valve assembly includes a plurality of lugs on an outer surface thereof, and wherein the port of the enclosure includes a plurality of recesses configured to closely receive the lugs of the body of the valve assembly therein to rotationally couple the body of the valve assembly to the enclosure, wherein the body of the supplemental valve assembly includes a plurality of lugs on an outer surface thereof, and wherein the port of the supplemental enclosure includes a plurality of recesses configured to closely receive the lugs of the body of the supplemental valve assembly therein to rotationally couple the body of the supplemental valve to the supplemental enclosure, and wherein the lugs of the body of the valve assembly have at least one of a different positioning, size or shape relative to the lugs of the body of the supplemental valve assembly.

In a further embodiment the present invention is an adsorbent system comprising a valve assembly, the valve assembly including: a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment; an adsorbent material in the channel, wherein the channel and adsorbent material are configured such that fluid flowing through the channel is flowable over the adsorbent material; a valve membrane positioned at or adjacent to, or in fluid communication with, the first end of the channel, wherein the valve membrane has at least one slit and is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment; a first support plate located on a first side of the valve membrane; and a second support plate located on a second, opposite side of the valve membrane, wherein the valve membrane is configured such that at least one of: 1) a portion of the valve membrane contacts at least one of the first or second support plates when the valve membrane is in one of the first or second open positions to limit at least one of an extent of an opening of the valve membrane; or 2) at least one of the first or second support plates contacts a flap of the membrane when the membrane is in a closed position, to adjust an opening pressure of the membrane in at least one of the first or second open positions.

According to a further embodiment, a deflected portion of the valve membrane is configured to not contact the other one of the first or second support plates when the valve membrane is either the first or the second open positions.

According to a further embodiment, at least one of: 1) the first and second predetermined pressure differentials are not equal; or 2) the valve membrane is configured to enable a greater volume of fluid through the valve at a given pressure when the valve membrane is in the second open position as compared to when the valve membrane is in the first open position at the given pressure.

In a further embodiment the present invention is an adsorbent system comprising a valve assembly, the valve assembly including: a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment; an adsorbent material in the channel, wherein the channel and adsorbent material are configured such that fluid flowing through the channel is flowable over the adsorbent material; a valve membrane positioned at or adjacent to, or in fluid communication with, the first end of the channel, wherein the valve membrane has at least one slit and is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment; a first support plate located on a first side of the valve membrane, the first support plate having an opening at least partially aligned with the at least one slit; and a second support plate located on a second, opposite side of the valve membrane, the second support plate having an opening at least partially aligned with the at least one slit, wherein the opening of the second support plate has at least one of: 1) a different size compared to the opening of the first support plate; or 2) a different shape compared to the opening of the first support plate; or 3) a different positioning, relative to the at least one slit, compared to the opening of the first support plate.

According to a further embodiment, at least one of: 1) an absolute value of the first and second predetermined pressure differentials are not equal; or 2) the valve membrane is configured to enable a greater volume of fluid through the valve membrane at a given pressure when the valve is in the second open position as compared to when the valve membrane is in the first open position at the given pressure.

In a further embodiment the present invention is a method comprising: accessing a valve body having a channel; positioning an adsorbent material in the channel; positioning a membrane in the channel; positioning an inner support plate, having an opening, in the channel such that membrane is positioned between the inner support plate and the adsorbent material; positioning a valve membrane in the channel; positioning an outer support plate, having an opening, in the channel such that valve membrane is positioned between the outer support plate and the inner support plate; and positioning a vent material on or adjacent to the outer support plate, such that fluid can flow through the channel, the adsorbent material, the inner support plate, the valve membrane and the outer support plate, wherein the valve membrane is configured to move to a first open position when there is a first predetermined pressure differential thereacross, and wherein the valve membrane is configured to move to a second open position, in an opposite direction compared to when the valve membrane is in the first open position, when there is a second predetermined pressure differential thereacross, and wherein at least one of: 1) the membrane and the inner support plate are coupled together prior to positioning the membrane in the channel and prior to positioning the inner support plate in the channel; or 2) the vent material and the outer support plate are coupled together prior to positioning the outer support plate in the channel and prior to positioning the vent material in the channel.

According to an embodiment of the method: 1) the membrane and the inner support plate are coupled together prior to positioning the membrane in the channel and prior to positioning the inner support plate in the channel; and 2) the vent material and the outer support plate are coupled together prior to positioning the outer support plate in the channel and prior to positioning the vent material in the channel.

According to an embodiment of the method at least one of: 1) the membrane and the inner support plate are coupled together via overmolding prior to positioning the membrane in the channel and prior to positioning the inner support plate in the channel; or 2) the vent material and the outer support plate are coupled together via overmolding prior to positioning the outer support plate in the channel and prior to positioning the vent material in the channel.

According to an embodiment of the method, the method further comprises positioning a supplemental membrane at or adjacent to the channel, and positioned at an opposite end of the channel relative to the membrane, such that the adsorbent material is positioned between the membrane and the supplemental membrane.

According to an embodiment of the method the outer support plate is coupled to the valve body via an interference fit, wherein the step of positioning the outer support plate in the channel includes axially compressing the valve membrane, the inner support plate and the membrane, and wherein the resultant assembly is coupled together without any adhesives and without welding.

According to an embodiment of the method, the method further comprises inserting the resultant assembly into an enclosure having a cavity defining a humidity-controlled environment such that a first end of the channel is in selective fluid communication with an ambient environment and a second end of the channel is in fluid communication with the humidity-controlled environment.

According to an embodiment of the method the valve membrane is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment, wherein at least one of: 1) the first and second predetermined pressure differentials are not equal; or 2) the valve membrane is configured to enable a greater volume of fluid to flow through the valve at a given pressure when the valve membrane is in the second open position as compared to when the valve membrane is in the first open position at the given pressure.

According to an embodiment of the method the valve membrane has least one slit formed therein, wherein each opening of each support plate is at least partially aligned with the at least one slit of the valve membrane, and wherein the opening of the inner support plate has at least one of a different size, shape or positioning relative to the at least one slit, as compared to the opening of the outer support plate.

In a further embodiment the present invention is an adsorbent system comprising a valve assembly, the valve assembly including: a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment, wherein the channel has a non-regular polygon, non-circular shape in cross section; an adsorbent material in the channel, wherein the channel and adsorbent material are configured such that fluid flowing through the channel is flowable over the adsorbent material; and a valve assembly positioned at or adjacent to, or in fluid communication with, the first end of the channel, wherein the valve assembly is configured to move to a first open position when there is a first predetermined pressure differential between the channel and the ambient environment, and wherein the valve assembly is configured to move to a second open position, when there is a second predetermined pressure differential between the channel and the ambient environment.

According to a further embodiment, the channel has a non-star shape in cross section such that the cross section has at least one point from which the entire shape boundary is not visible.

According to a further embodiment, the channel has, in cross section, a central hub and a plurality of petals extending radially outwardly from the central hub.

According to a further embodiment, each petal has a curved outer surface and is arranged in swept orientation.

According to a further embodiment, each petal extends straight radially outwardly from the hub.

According to a further embodiment, each petal has an increasing width, moving in a radially outer direction.

According to a further embodiment, of petal has a constant width moving in a radially outer direction.

According to a further embodiment, the channel has at least three petals.

According to a further embodiment, the valve includes a single valve membrane having at least one slit formed therein, and wherein the valve assembly further includes a first support plate located on a first side of the valve membrane and a second support plate located on a second, opposite side of the valve membrane, wherein each support plate has an opening formed therein that is at least partially aligned with the at least one slit of the valve membrane, and wherein the opening of the first support plate has at least one of a different size, shape or positioning relative to the at least one slit, as compared to the opening of the second support plate.

According to a further embodiment, at least one of: 1) an absolute value of the first and second predetermined pressure differentials are not equal; or 2) the valve assembly is configured to enable a greater volume of fluid through the valve assembly at a given pressure when the valve is in the second open position as compared to when the valve assembly is in the first open position at the given pressure.

In a further embodiment the present invention is an adsorbent system comprising a valve assembly, the valve assembly including: a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment, channel has, in cross section, a central hub and a plurality of petals extending radially outwardly from the central hub; an adsorbent material in the channel, wherein the channel and adsorbent material are configured such that fluid flowing through the channel is flowable over the adsorbent material; and a valve assembly positioned at or adjacent to, or in fluid communication with, the first end of the channel, wherein the valve assembly is configured to move to a first open position when there is a first predetermined pressure differential between the channel and the ambient environment, and wherein the valve assembly is configured to move to a second open position, when there is a second predetermined pressure differential between the channel and the ambient environment.

All features previously disclosed in connection with one or more embodiments of the invention are not limited to these embodiments but can also be used in connection with all other embodiments of the invention.

Further details and advantages of the invention will be discussed on the basis of the accompanied drawings:
- Fig. 1: is a cross section view of a system including an valve assembly having an adsorbent material;
- Fig. 2: is a cross sectional view of the valve assembly of the system of Fig. 1;
- Fig. 3: is a detail view of part of the valve assembly of Fig. 2, with the valve membrane in a first open position;
- Fig. 4: is a detail view of part of the valve assembly of Fig. 2, with the valve membrane in a second open position;
- Fig. 5: is a front perspective exploded view of the valve assembly of the system of Fig. 1;
- Fig. 6: is a rear perspective exploded view of the valve assembly of the system of Fig. 1;
- Fig. 7: shows the system of Fig. 1, with the valve assembly exploded away from the enclosure;
- Fig. 8: is an end view of the system of Fig. 7, taken along line 8-8;
- Fig. 9: shows the system of Fig. 7, with the valve assembly inserted into the enclosure;
- Fig. 10: is an end view of the system of Fig. 9, taken along line 10-10, with the valve assembly twisted from the position shown in Fig. 9;
- Fig. 11: is a side view of the valve assembly of Fig. 1;
- Fig. 12: is a side view of an alternative valve assembly;
- Fig. 13: is a side view of another alternative valve assembly;
- Fig. 14: is an end view of the valve assembly of Fig. 1, showing a configuration of the channel;
- Fig. 15: is an end view of the valve assembly of Fig. 1, showing an alternate channel configuration; and
- Fig. 16: is an end view of the valve assembly of Fig. 1, showing another alternate channel configuration.

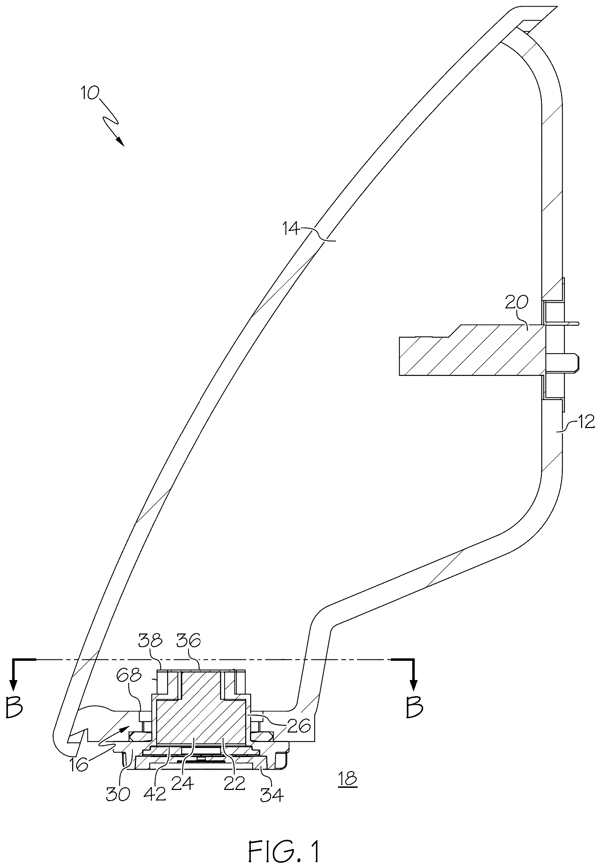

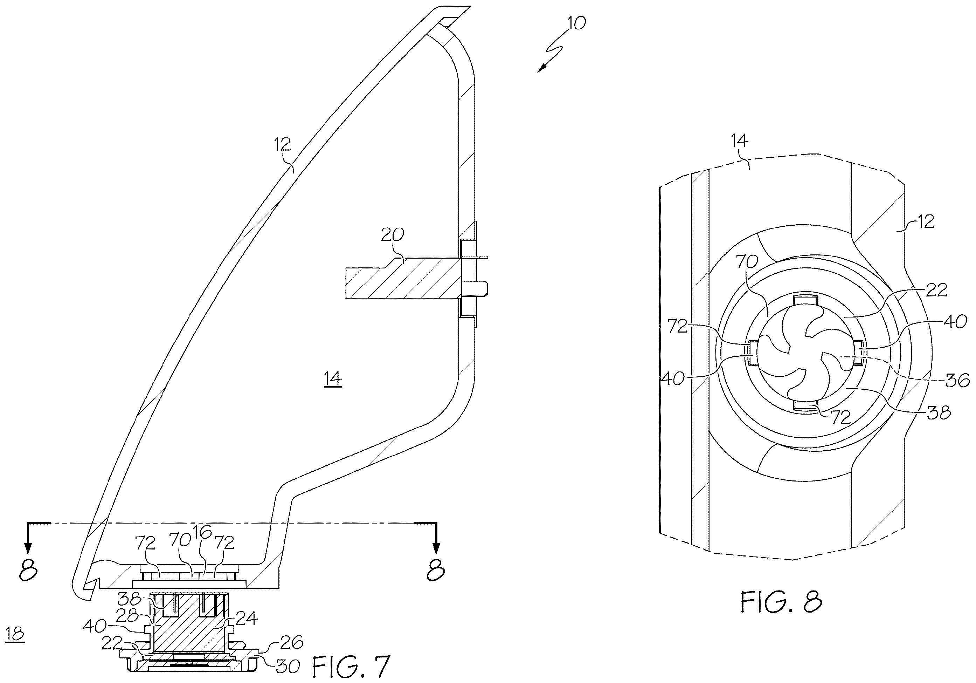

With reference to Fig. 1, in one embodiment the regenerative adsorbent system of the present invention, generally designated 10, includes a component or enclosure 12 having a generally closed/sealed cavity or chamber 14 therein, and a port or opening 16 (see Fig. 7) providing access to/fluid communication with the cavity 14. The component 12 can in one case be sealed/closed relative to the ambient environment 18 except for via the port 16, although in some cases the component 12 can have other ports and/or vents (not shown). In the illustrated embodiment the component 12 includes or takes the form of an automobile or vehicle light/lamp assembly, having a light source 20, and it may be desired to control the moisture/humidity of the cavity 14. However, the component 12 can be or take the form of nearly any component or device defining an enclosed chamber, such as an enclosed volume in which it is desired to control moisture/humidity, including but not limited to enclosures or cabinets storing electronic components therein.

The system 10 includes a valve assembly 22 positioned in the port 16 and controlling a flow of fluid, such as air, between the cavity 14 and the ambient environment 18. The valve assembly 22 can include an adsorbent material 24 therein, as will be described in greater detail below, and the valve assembly 22 can restrict/control the flow of fluid between the cavity 14 and the ambient environment 18 through the port 16, as will be described in greater detail below.

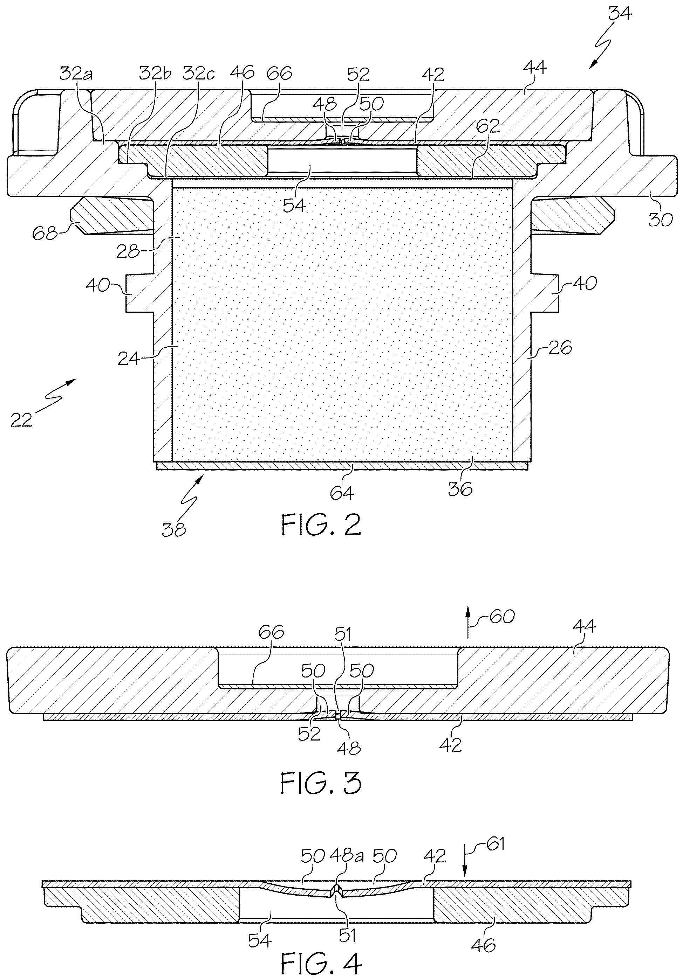

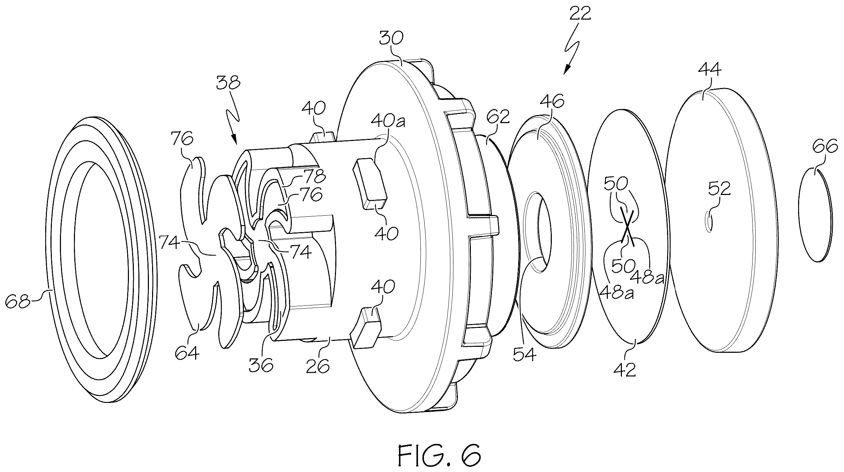

With reference to Figs. 2-6, the valve assembly 22 can include, generally speaking, a valve body 26 that is generally stiff and rigid, and generally cylindrical in the illustrated embodiment defining a central channel 28. The valve body 26 includes a radially outwardly-extending flange 30, defining a set of inner lips or steps 32a, 32b, 32c at or adjacent to a first or outer axial end 34 of the valve body 26/channel 28. The valve body 26 has an exit port 36 at or adjacent to an opposite second or inner axial end 38 of the valve body 26/channel 28. The valve body 26 can further include a set of mounting lugs 40 (four lugs 40, in the illustrated embodiment) on an outer surface thereof, and spaced circumferentially about the valve body 26.

The valve assembly 22 can include a flexible/pliable valve membrane 42 positioned in the valve body 26. The valve assembly 22 can include a first or outer support plate or regulator 44 positioned on an outer or first side of the valve membrane 42, and a second or inner support plate or regulator 46 positioned on an opposite, inner or second side of the valve membrane 42. The first support plate 44 engages and is supported by the lip 32a of the valve body 26, and the second support plate 46 engages and is supported by the lips 32b, 32c of the valve body 26 in the illustrated embodiment. The valve membrane 42 can be made of any of a wide variety of materials, including silicone, rubber and/or synthetic rubber including ethylene propylene diene monomer (EDPM), and can be a single, unitary, seamless continuous structure in one embodiment. The valve membrane 42 can take the form of a single valve membrane instead of, for example, two separate, spaced apart valves or valve membranes that are individually openable/actuable, for example at different pressures and/or allowing flow in different directions.

The valve membrane 42 can include a slit 48 or slits 48 formed through a thickness thereof to enable fluid to flow across the valve membrane 42 when there is a sufficient pressure differential thereacross. The slit(s) 48 can be centered on the valve membrane 42 and/or have at least a portion located at a center of the valve membrane 42. In the illustrated embodiment, the slit 48 takes the form of a "X" or "+" shape with two intersecting and/or perpendicular legs 48a, thereby defining four generally triangular flaps or deflectable portions 50, with each flap 50 being positioned between two of the legs 48a.

When there is a sufficient pressure differential across the valve membrane 42, the flaps 50 deflect/deform in the direction of the volume of lower pressure as deflected portions 50, and allow fluid to flow across the valve membrane 42. However it should be understood that the slit(s) 48 can have any of a variety of other shapes and configurations beyond that shown in the figures, including having more than two legs 48a, having legs 48a of varying length/shape/curvature, or can take the form of a single slit that is straight, has angled and/or curved portions, etc.

The first 44 and second 46 support plates are both relatively stiff and rigid, and are located on either side of the valve membrane 42, positioned in the valve body 26. In one case both the first 44 and second 46 support plates are in direct contact with the valve membrane 42 (in direct contact with at least about 50% of a surface area of the valve membrane 42 in one case, or an entirety of the surface area of the valve membrane 42 in another case), and support the valve membrane 42 along both sides thereof. The first support plate 44 has a first support plate opening 52, and the second support plate 46 has a second support plate opening 54, where both openings 52, 54 are aligned with each other in the illustrated embodiment. Both openings 52, 54, can be aligned with (and/or at least partially overlap with) the slit 48 and/or flaps 50.

The first support plate opening 52 (or at least an (axially inner) portion of the opening 52, located adjacent to the valve membrane 42) and the second support plate opening 54 (or at least an (axially outer) portion of the opening 54, located adjacent to the valve membrane 42) can have different sizes and/or shape, and/or positioning relative to the slit 48/flaps 50 (e.g. one or both openings 52, 54 be offset from the slit 48 and/or flaps 50, and/or from each other, to provide a different positioning when viewed in end view, along a central axis of the valve assembly 22/valve membrane 42) for reasons which are described below.

The valve membrane 42 can be biased (for example due to its natural resting shape, when no outside forces are applied) to its closed position, where the flaps 50 are co-planar with each other and/or the remainder of the valve membrane 42. In this case the valve membrane 42 blocks the flow of fluid through the valve membrane 42 and valve assembly 22. Thus the valve membrane 42 remains in closed position when there is no pressure differential, or a sufficiently low pressure differential, between the channel 28/cavity 14 and the ambient environment 18. When there is a first predetermined (positive, in one case) pressure differential between the channel 28/cavity 14 and the ambient environment 18 (e.g. in one case, where the pressure in the channel 28/cavity 14 is sufficiently greater than the pressure in the ambient environment 18), the valve membrane 42 is configured to move in a first (axially outer, in the illustrated embodiment) direction 60 to a first open position, as shown in Fig. 3. When in the first open position the flaps 50 are deflected axially outwardly and the valve assembly 22/valve membrane 42 thereby enables fluid (air) to flow from the channel 28/cavity 14 to the ambient environment 18. Moreover, when the valve membrane 42 is in the first open position the flaps 50 move toward and/or are at least partially received in the opening 52 of the first support plate 44.

Conversely, when there is a second predetermined (negative, in one case) pressure differential between the channel 28/cavity 14 and the ambient environment 18 (e.g. in one case, where the pressure in the channel 28/cavity 14 is sufficiently less than the pressure in the ambient environment 18), the valve membrane 42 is configured to move in a second, opposite direction 61 to a second open position, as shown in Fig. 4. When the second open position the flaps 50 move axially inwardly and the valve assembly 22/valve membrane 42 thereby enables fluid (air) to flow from the ambient environment 18 to the channel 28/cavity 14. Moreover, when the valve membrane 42 is in the second open position the flaps 50 move toward and/or are at least partially received in the opening 54 of the second support plate 46. Thus the valve assembly 22/valve membrane 42 can be a passive valve that operates without the use of any outside forces or power source.

As noted above, the first support plate opening 52 and second support plate opening 54 can have different sizes and/or shapes, and/or positioning relative to the slit 48/flaps 50, and these differences can effect the operation of the valve assembly 22/valve membrane 42 in the two opposite directions 60, 61. For example, in the illustrated embodiment the first support plate opening 52 is relatively small (e.g. in surface area, at least at locations adjacent to the valve membrane 42) compared to the second support plate opening 54. Thus, as can be seen, when the valve membrane 42 is in the first open position (Fig. 3), the deflection of the valve membrane 42/flaps 50 is small/more restricted as compared to when the valve membrane 42 is in the second open position (Fig. 4).

In one embodiment, the second support plate opening 54, at least at a location adjacent to the valve membrane 42, is larger than the slits 48/flaps 50, and/or no portion of the slits 48/flaps 50 is engaged by the second support plate 46 when the valve membrane 42 is in the second open position. In one embodiment, the first support plate opening 52 (at least at a location adjacent to the valve membrane 42) is smaller than the slits 48/flaps 50, and/or at least part of the slits 48/opening 51 are engaged by the first support plate 44 when the valve membrane 42 is in the first open position.

As can be seen the flaps 50 of the valve membrane 42 engage at least one of the associated support plates 44, 46 when the valve assembly 22/valve membrane 42 is in the first and second open positions, respectively, and thus one or both support plates 44, 46 restrict the opening of the valve membrane 42 when in the first and/or second open positions. In this manner when the valve membrane 42 is in the second open position of Fig. 4 the valve membrane 42 is "open" to a greater extent compared to when the valve membrane 42 is in the first open position of Fig. 3, and the opening 51 defined by the slit 48/flaps 50/valve membrane 42 is greater (e.g. in surface area), enabling a greater volume of fluid to flow through the valve assembly 22/valve membrane 42 for a given pressure differential. It can be seen that, since the valve membrane 42 engages one or both of the associated support plates 44, 46, the first and second open positions can represent the "maximum" open positions, or the greatest extent to which the valve membrane 42/flaps 50 can move in the first 60 and second 61 directions, respectively.

The interaction between the valve membrane 42/flaps 50 and the support plates 44, 46 can also effect the opening or cracking pressure of the valve membrane 42 in the first 60 and second 61 directions. In particular the pressure required to deflect the flaps 50 in the first direction 60 (toward the first open position) may be relatively high, since the flaps 50 engage the support plates 44 along a relatively long distance of the flaps 50. Thus the free or "cantilevered" section of the flaps 50, when moving in the first direction 60, is relatively short, the flaps 50 are relatively stiff, and the pressure required to open or crack the valve membrane 42 in the first direction 60/toward the first open position may be relatively high. Conversely the pressure required to deflect the flaps 50 in the second direction 61 (toward the second open position) may be relatively low, since the flaps 50 engage the support plates 46 along a relatively short distance of the flaps (if at all). Thus the free or "cantilevered" section of the flaps 50, when moving in the second direction 61, is relatively high, the flaps 50 are effectively more flexible and the pressure required to open or crack the valve membrane 42 in the second direction 61 toward the second open position may be relatively low.

Thus the pressure differential (or an absolute value thereof) required to move the valve membrane 42/flaps 50 to the first open position can be different/greater than the differential pressure (or an absolute value thereof) required to move the valve membrane 42/flaps 50 to the second open position, and/or the surface area of the opening 51 defined by the flaps 50 when in the first open position is different/smaller as compared to when in the second open position (for a given differential pressure (or absolute value thereof)). In one case the force required to move the flaps 50 to the first open position can be 50% greater in one case, or 100% greater in another case, than the force required to move the flaps 50 to the second open position. In one case the surface area of the opening 51 defined by the flaps 50 when in the first open position is 50% smaller in one case, or 100% smaller in another case, as compared to the opening 51 defined by the flaps 50 when in the second open position, at a given differential pressure (or absolute value thereof).

It can be desired to have a larger opening force and/or smaller opening when the valve membrane 42 is moved to/in the first open position, where it is desired to ensure a high pressure evacuation of air/fluid from the cavity 14. This can provide a "burst" effect, to thereby provide a high pressure of fluid flow, which is more effective at removing humidity from the adsorbent material 24. For example when the adsorbent material 24 is a particulate desiccant, the high pressure "burst" flow more deeply penetrates the various crevices between the particles, or otherwise within the desiccant/adsorbent material 24, to enable more effective drying/recharging. Thus this arrangement can provide better performance.

However if desired this configuration can be reversed such that the force required to move the valve membrane 42/flaps 50 to the second open position is greater than the force required to move the valve membrane 42/flaps 50 to the first open position, and/or the surface area of the opening 51 defined by the flaps 50 when in the second open position is smaller as compared to when in the first open position, for a given pressure differential. In addition, in yet another case the valve membrane 42/valve assembly 22 can have a symmetrical design such that the force required to move the valve membrane 42/flaps 50 to the first open position is the same as the force required to move the valve membrane 42/flaps 50 to the second open position, and/or the surface area of the opening defined by the valve membrane 42/flaps 50 when in the first open position, is the same as when in the second open position, for a given pressure differential.

As noted above, controlling/limiting the opening of the valve membrane 42/flaps 50 can be accomplished by providing differently-sized openings of the first 44 and second 46 support plates. However, as also briefly outlined above, controlling/limiting the opening of the valve membrane 42/flaps 50 can be accomplished by providing different shapes of the openings 52, 54 of the support plates 44, 46. For example the openings 52, 54 can have other shapes besides circular, including non-round or eccentric, for example being shaped as triangles, rectangles, hexagons or other irregular or irregular shapes. In addition or alternatively, the openings 52, 54 can be the same size and/or shape, but one or both of the openings 52, 54 can radially offset from center and/or at least partially radially offset from the slit(s) 48/flaps 50, and/or be radially offset from each other, and/or be axially spaced from the slits 48/flaps 50.

The valve assembly 22 can include the adsorbent material 24 in the channel 28/body 26. The adsorbent material 24 can take any of a wide variety of forms. In one case, however, the adsorbent material 24 is type C silica gel (also known as wide pore silica gel) in particulate form or bead form (shown schematically in Fig. 2) (but could also be a solid block or blocks), which can be recharged at relatively low temperatures, but can take the form of other silica gel types (including types A and/or B), as beads, zeolites, alumina and other desiccants. In one case, the adsorbent material 24 is type C silica gel with an average pore diameter of between about 90A and about 300A.

With reference to Figs. 2, 5 and 6 the valve assembly 22 can include a first or outer membrane 62 located at the outer (first) end 34 of the channel 28/valve body 26, and an second or inner membrane 64, located at the opposite (second or inner) end of the channel 28/valve body 26, to trap the adsorbent material 24 in the channel 28. The first 62 and second 64 membranes can be generally air and/or fluid permeable and in one case can take the form of a fine mesh, microporous nonwoven sheet or other similar material with a pore size smaller than a size of the particulates of the adsorbent material 24 (if particulate form is utilized). In the illustrated embodiment the inner membrane 64 has a "propeller" shape that matches the shape of the associated channel 28, which shape is described in greater detail below.

The valve assembly 22 can also include a vent material 66 coupled to the second support plate 44 and covering the axially outer end of the opening 52 of the second support plate 44. The vent material 66 can be moisture vapor (e.g., water vapor) permeable but liquid (e.g., liquid water) impermeable to prevent bulk liquid from entering the valve system 22/channel 28, and thus can be a semipermeable membrane. The valve assembly 22 can also include a seal 68, mounted on a radially outer surface of the valve body 26, and configured to be positioned between the valve body 26 and outer surface of the enclosure 12, when the valve assembly 22 is mounted in place.

As noted above the valve body 26 can include a set of mounting lugs 40 on an outer surface thereof, and spaced circumferentially about the valve body 26. The port 16 can include a set of correspondingly shaped and positioned circumferentially extending recesses 70 (see Fig. 7), spaced circumferentially about the port 16, and a set of correspondingly shaped and positioned axially extending slots 72, spaced circumferentially about the port 16. In one embodiment, in order to mount the valve assembly 22/valve body 26 to the enclosure 12, the valve assembly 22/valve body 26 is first aligned with the port 16, as shown in Figs. 7 and 8, where the lugs 40 are aligned with the slots 72. The valve assembly 22/valve body 26 is then inserted in an axially inner direction into the port 16 such that the lugs 40 are received in the slots 72.

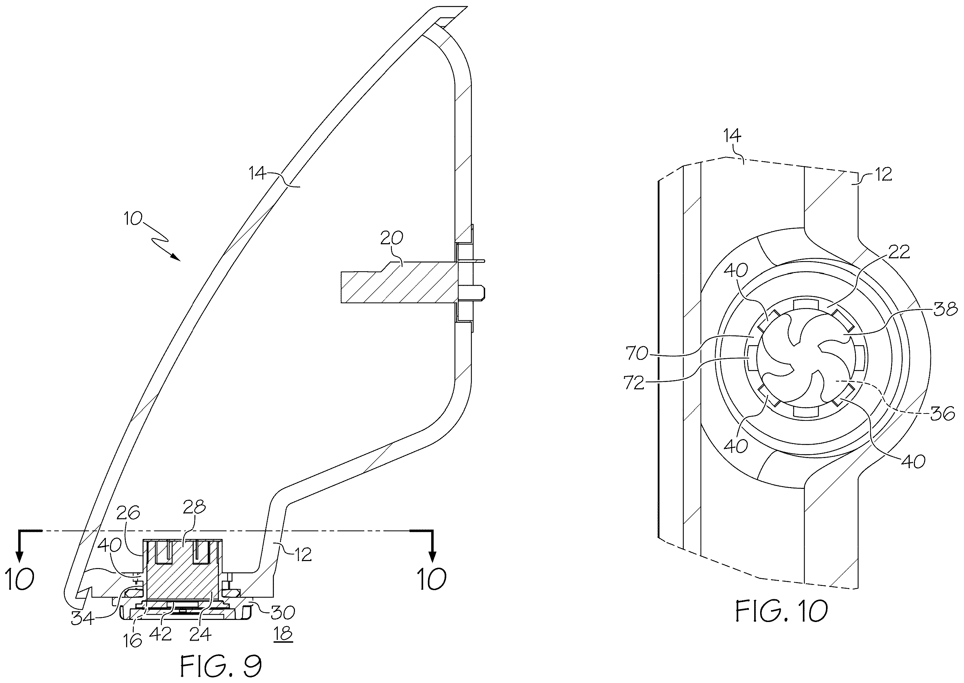

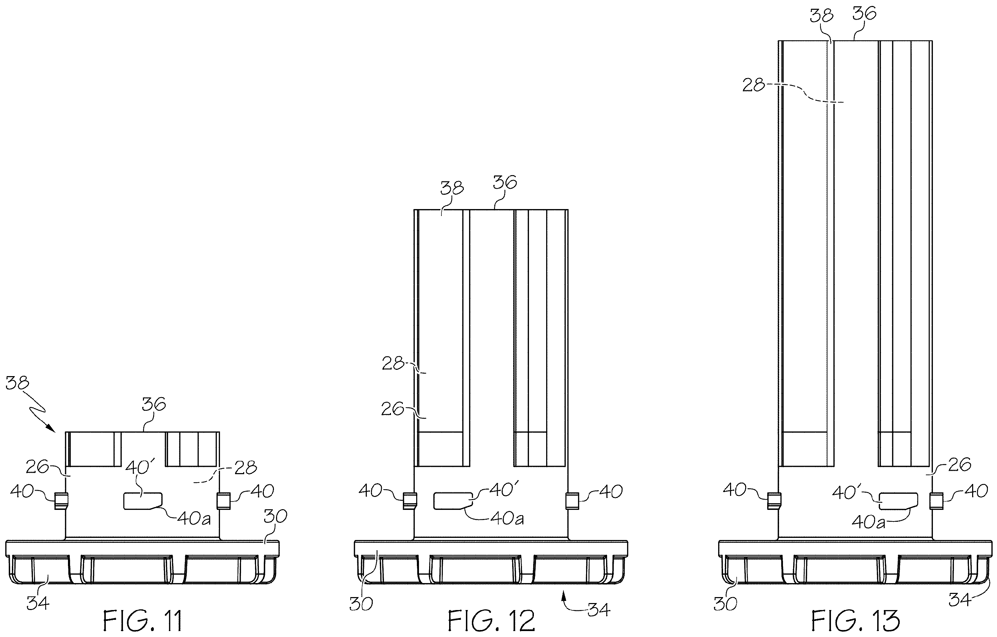

The valve assembly 22/valve body 26 is then twisted/rotated in the circumferential direction, which causes the lugs 40 to be firmly received, via an interference fit, in the recesses 70, as shown in Fig. 10. Each lug 40 can have a tapered leading edge 40a (See Fig. 11) to enable the lug 40 to be received in the associated recess 70. The seal 68 is compressed between the lip 30 and the enclosure 12 when the valve assembly 22/valve body is mounted as shown, and when the valve assembly 22 is coupled to the component 12, the channel 28 is in fluid communication with the cavity 14. Thus this arrangement provides for a relatively simple insert-and-twist mounting arrangement. In order to remove the valve assembly 22/valve body 26, the operation is simply reversed, where the valve assembly 22/valve body 26 is rotated in the opposite direction until the lugs 40 are aligned with the slots 72, and the valve assembly 22/valve body 26 is then retracted away from the enclosure 12.

With reference to Figs. 11-13, the valve assembly 22/valve body 26 can be provided in differing sizes, more particularly, differing axial lengths, in one case, with three different configurations being shown. Due to the differing lengths, each valve assembly 22/valve body 26 provides a differing length of the associated channel 28, and thus a differing amount of adsorbent material 24 in the valve. Thus this arrangement enables the desired valve assembly 22, with the desired amount of adsorbent material 24, to be used with a suitably-sized enclosure.

Despite the different size and amount of absorbent material 24, each valve assembly 22/valve body 26 can have the same footprint/outer perimeter size and/or shape to provide ease of manufacturing, storage and shipping. However if desired each valve assembly 22/valve body 26 can have a different size/shape/positioning/spacing of lugs 40, to ensure that each valve assembly 22/valve body 26 can only be coupled to the desired, associated type of enclosure 12. For example, the valve assembly 22/valve body 26 of Fig. 11 utilizes a center or adapted lug(s) 40' that, when positioned as shown, is equally spaced between the adjacent lugs 40. In contrast, the valve assembly 22/valve body 26 of Fig. 12 includes an adapted lug(s) 40' that, when positioned as shown, is offset from center (circumferentially) in the left direction, and positioned closer to one lug 40 than another. The valve assembly 22/valve body 26 of Fig. 12 utilizes an adapted lug(s) 40' that is located offset from center circumferentially in the right direction.

The slots 72/recesses 70 located on the port 16 of the associated enclosure 12 can have a circumferential location, and the recesses 70 can have an axial location, that corresponding to the axial location of the lugs 40, 40' of the associated valve assembly 22/valve body 26, when the valve assembly/valve body 26 is inserted, to ensure each valve assembly 22/valve body 26 can only be coupled to the appropriate matching enclosure 12. However it should be understood that the lugs 40 of the differing valve assemblies 22/valve bodies 26 can, instead of or in addition to varying in circumferential location, vary in at least one of size, shape and/or axial positioning to each other to ensure proper mating of valve assemblies 22/valve bodies 26 with the associated enclosure 12.

In order to assemble the valve assembly 22 in one embodiment, the valve body 26 is first provided, and the following steps are carried out, in one case, in the order described below by an assembler. In particular, after the valve body 26 is provided, the inner membrane 64, which helps to retain the adsorbent material 24 in the body 26, is coupled to the body 26. In one case, however, the inner membrane 64 is coupled to the body 26 prior to being shipped to the assembler, such as by over molding the inner membrane 64 to the body 26. In this case the assembler does not need to coupled to the inner membrane 64 to the valve body 26.

The adsorbent material 24 is then placed in the valve body 26/channel 28. Next the outer membrane 62, which also helps to retain the adsorbent material in the body 26, is coupled to the axially outer side of the body 26. The second support plate 46 is then coupled to the valve body 26, followed by the valve membrane 42. In one case, however, the outer membrane 62 and the second support plate 46 are coupled together, prior to insertion in the body 26, such that the outer membrane 62 and second support plate 46 are inserted into the body 26 as a unit. The outer membrane 62 can in one case be overmolded to the second support plate 46 to couple them together. By pre-attaching the outer membrane 62 and the second support plate 46, user error during assembly can be reduced by ensuring the outer membrane 62 and second support plate 46 are in the correct orientation and position. In particular, since the outer membrane 62 can be relatively thin and pliable, it can be difficult to get the outer membrane 62 to lie flat in its seated position. In contrast, the second support plate 46 is relatively stiff and rigid, and thus is more easily positioned in the desired location. Thus, by pre-securing the outer membrane 62 to the second support plate 46, it can be ensured that the outer membrane 62 is properly positioned.

Next the valve membrane 42 is positioned on the second support plate 46. The first support plate 44 is then secured in place, trapping the valve membrane 42 between the first support plate 44 and the second support plate 46. The vent material 66 is then positioned on the first support plate 44. In one case, however, the vent material 66 and the first support plate 44 are coupled together, prior to insertion in the body 26, such that the vent material 66 and first support plate 44 are inserted into the body 26 as a unit. The vent material 66 can in one case be overmolded to the first support plate 44 to couple them together. By pre-attaching the vent material 66 and the first support plate 44 user error may be reduced by ensuring the outer vent material 66 and first support plate 44 are in the correct orientation. In particular, by pre-securing the more pliable vent material 66 to the relatively rigid first support plate 44, it can be ensured that the outer vent material 66 is properly positioned.

When the first support plate 44 is inserted into the body 26, the first support plate 44 can be retained in the body 26 via an interference fit. In addition, the first support plate 44 can axially compress the stack of the first support plate 44, valve membrane 42, second support plate 46, and outer membrane 62 and ensure a secure and fluid-tight coupling of those components with the body 26 and with each other. The O-ring 68 can then be positioned on the outside of the body 26, and the body 26/valve assembly 22 mounted to the enclosure 12. Thus in one case the valve assembly 22, and the various components described herein, can be quickly and assembly assembled without the need for adhesives and/or welding.

In one embodiment the channel 28 has an extruded shape with a constant shape, in cross section, along its length, although the channel 28 can also have a cross sectional shape that varies along its length. In one embodiment the channel 28 has an irregular and/or eccentric non-round shape, and/or non-polygon cross sectional shape along at least part or all of its length, including the shapes described and shown below. The cross section of the channel 28 can in some cases be a polygon, but a concave, and not a convex, polygon (e.g. all interior angles are less than 180 degrees) and/or be a simple polygon. The channel 28 may be a non-star shaped polygon or shape in cross section; that is, it may have a point from which the entire polygon or shape boundary is not visible, and thus "non-star" is meant non-star in a geometric sense. In one case the channel 28 has a non-circular and/or non-square and/or non-rectangular cross sectional shape along at least part or all of its length. The channel 28 can, in one case, have the same cross sectional size and shape along its entire length. The shape of the channel 28 as described herein can apply to both the inner surface (e.g. facing and retaining the adsorbent material 24 therein) and/or outer surface (e.g. facing and exposed to the cavity 14 when inserted into the enclosure 12) thereof.

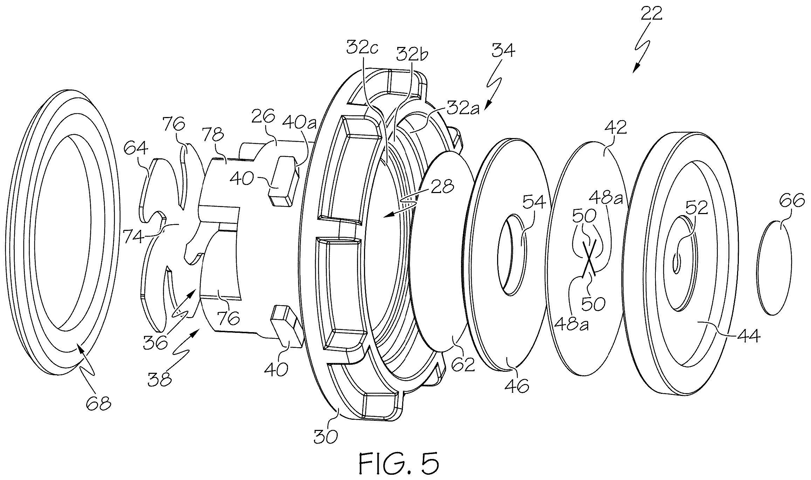

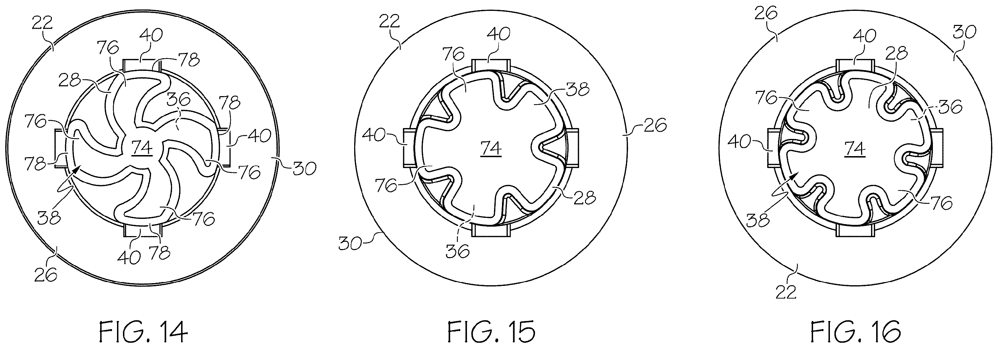

In the embodiment shown in Figs. 5, 6 and 14, the channel 28 has a central (hollow) hub 74 and a plurality of (hollow) petals or spokes 76 (four petals 76 as shown) extending radially outwardly away from the hub 74. Each of the petals 76 is curved, e.g. having curved sidewalls on both sides in one case, and swept (or having a swept orientation) in a circumferential direction (swept in the clockwise direction when moving in a radially outer direction in the illustrated embodiment, such that a centerline of each petal extends along a curved line when moving in a radially outer direction) to provide a "propeller" shape as shown in Fig. 14. Each of the petals 76 of the Fig. 14 embodiment has an increasing width, moving in the radially outer direction, and terminates in a generally flat, circumferential extending tip 78.

The specific shape of the channel 28 as shown, and as described above, helps to improve the thermal conductivity between the adsorbent material 24 in the channel 28 and the cavity 14. In particular, in some cases it may be desired to improve the heat transfer from the cavity 14 to the channel 28/adsorbent material 24, such that the fluid in the channel 28 is heated faster to more closely match the temperature of the cavity 14. This can help to ensure the valve assembly 22/valve membrane 42 and is more responsive, and opens sooner, in response to increased heat/temperature in the cavity 14. Thus the convoluted shape of the outer surface of channel 28 increase its surface area exposed to the cavity 14, to thereby more closely thermally couple the channel 28 and the cavity 14.

In one case, the outer surface area/perimeter of the channel 28 is at least about 100% greater in one case, or at least about 200% greater in another case, than the equivalent outer surface area/perimeter of an equivalently-sized cylinder/circle (e.g. having a diameter that matches the outer diameter of the channel 28, defined by the tips 78). The channel 28 can have a radial symmetry/rotational symmetry, and in one case can include at least three petals 76.

In another embodiment, as shown in Fig. 15, the outer surface of the channel 28 has a central hub 74 and a plurality of petals 76 (five petals 76 in the illustrated embodiment), but in this case the petals 76 are not swept in the circumferential direction, and instead extend straight radially outwardly to provide a "flower" shape. In the embodiment of Fig. 15 the central hub 74 is larger (has a larger diameter, relative to the diameter or effective outer diameter of the channel 28 as a whole; in one case the central hub has a diameter greater than 50% of the diameter of the channel 28 as a whole) as compared to the central hub 74 of the embodiment of Fig. 14. In addition, in this embodiment each of the petals 76 can have a constant width and/or slightly increasing width, moving in the radially outer direction. The embodiment of Fig. 14 may provide better thermal coupling compared to the embodiment of Fig. 15, but the embodiment of Fig. 15 may be easier/less expensive to manufacture, and/or may be able to better accommodate particulate desiccants due to its simplified shape.

In another embodiment, as shown in Fig. 16, the outer surface of the channel 28 has a central hub 74 and a plurality of petals 76 (six petals 76 in the illustrated embodiment), the petals 76 are not swept in the circumferential direction. Each of the petals 76 can have an initial narrowing and the have an increasing width, moving in the radially outer direction. In another case, if desired each of the petals 76 could instead extend straight radially outwardly with a constant thickness. In the embodiment of Fig. 16 the central hub 74 is larger (has a larger diameter, or effective outer diameter relative to the diameter of the channel 28 as a whole) as compared to the central hub 74 of Fig. 15, and/or the petals 76 have a shorter length in the radial direction. The embodiment of Fig. 15 may provide better thermal coupling compared to the embodiment of Fig. 16, but the embodiment of Fig. 16 may be easier/less expensive to manufacture due to its simplified shape, including a shorter extent of the petals 76.

As noted above, the valve membrane 42 can be naturally biased by its shape and/or configuration to its closed positions where the slit 48 is generally closed/sealed. When there is sufficient pressure differential across the valve membrane 42 (e.g. when the pressure in the channel 28 is sufficiently higher than the pressure in the ambient environment 18) the flaps 50 of the valve membrane 42 move to the first open position, moving the valve assembly 22/valve membrane 42 to an open position and allowing fluid to flow over the adsorbent material 24, and then exit the valve assembly 22/valve membrane 42. As described in greater detail below, an increase in pressure in the enclosure 12 is often due to increase heat or temperature. Ambient, or inlet, air/fluid passing through the membrane valve 42 is thus required to pass through the channel 28, and thereby flow over/through the adsorbent material 24 positioned therein, prior to reaching the cavity 14. Thus the outflow of heated air over the adsorbent material 24 helps to dry and recharge the adsorbent material 24. Once the pressure differential is sufficiently relieved, the valve membrane 42 will automatically return to its closed position.

Similarly, the valve membrane 42 will move to its second open position when there is a sufficient pressure differential thereacross (e.g. when pressure of fluid inside the channel 28 is sufficiently lower than pressure in the ambient environment 18), and the fluid flows over the adsorbent material 24, drying the fluid prior to entering the cavity 14. Once the pressure difference is sufficiently relieved, the valve membrane 42 will automatically return to its closed position. In one case, the valve membrane 42 has an open or cracking pressure, to either the first or second open position, of between about 0.1 mbar and about 50 mbar in one case, or between about 5 mbar and about 25 mbar in another case, although the cracking pressure of the valve membrane 42 can of course be varied as desired to suit the desired application/end use.

In many cases the temperature and/or pressure inside the cavity 14 will periodically vary. For example, when the light source 20 is operated, the heat generated by the light source 20, which can include for example a filament bulb, electric arc, LEDs, lasers or the like, will cause the temperature, and therefore pressure, inside the cavity 14 to raise, in which case the light source 20 serves as a heat source. The increased pressure is, in turn, transmitted through the channel 28 to the valve membrane 42. Alternatively, if desired a heat source can be provided, and coupled to and/or positioned in the cavity 14 and or in fluid or thermal communication with the cavity 14, and/or adsorbent material 24 and/or channels 28, to provide an active system 10 which provides for regular regeneration of the adsorbent material 24.

Sufficiently high pressure, relative to the ambient environment, will cause the valve membrane 42 to open and exhaust outlet air/fluid to provide sufficient pressure balance. Conversely, when the pressure in the cavity 14 and/or channel 28 becomes too low relative to the ambient atmosphere 18 (e.g. when the light source 20 cools down, or is not operated and/or due to other conditions) the valve membrane 42 will open and allow ambient air/fluid to enter the channels 28 until sufficient pressure balance is achieved. The system 10 can be designed to force all inlet fluid to flow over the adsorbent material 24 to dry the incoming inlet fluid prior to entering the cavity 14, and to force all outflow fluid, which is typically at a relatively higher temperature, to flow over or through the same material 24 to at least partially regenerate the adsorbent material 24 and carry some moisture out of the cavity 14.

In this manner, the valve assembly 22 helps to maintain pressure balance thereacross, but limits the amount of fluid exiting and/or entering the system 10/enclosure 12/valve assembly 22 to thereby minimize or reduce the amount of incoming fluid which needs to be treated by the adsorbent material 24. This helps to extend the life of the system 10 and ensures the adsorbent material 24 can sufficiently adsorb moisture. In addition, periodic use of the light source 20 or another heat source provides a natural heating and cooling cycle, which in turn causes thermal expansion and contraction of the air/fluid in the system 10 allowing moisture to be regularly vented. In addition, periodic operation of the light source 20 enables the adsorbent material 24 be at least partially regenerated due to the associated heat.

In addition, the valve assembly 22 can be aligned such that air/fluid flows, in a serial manner (and not, for example, in parallel paths) through the valve membrane 42 and then through the adsorbent material 24 for incoming fluid; and conversely through the adsorbent material 24 and then the valve membrane 42 for exiting fluid. Stated differently, all incoming fluid that flows through the valve assembly 22 from the ambient environment 18 to the cavity 14 must flow through both the valve membrane 42 and the adsorbent material 24, and conversely all outgoing fluid that flows through the valve assembly 22 from the cavity 14 to the ambient environment 18 must flow through both the adsorbent material 24 and the valve membrane 42. Accordingly the adsorbent material 24 and valve membrane 42 are arranged functionally in series and not functionally in parallel. This arrangement ensures that incoming fluid flows over the adsorbent material 24 to be treated (moisture removed) prior to entering the cavity 14, and outgoing (often, heated) fluid flows over the adsorbent material 24 to dry and/or recharge the adsorbent material 24.

The valve assembly 22 can be designed to be coupled to, and used in conjunction with, an enclosure 12 as an aftermarket or retrofit item; that is, after the enclosure 12 has been already manufactured and/or shipped and/or installed. In other cases, however, the system 10 can be integrated into the enclosure 12 at the time of manufacture. Once the valve assembly 22 is fluidly coupled to the cavity 14 of enclosure 12, the valve assembly 22 can control levels of humidity and remove undesired moisture from the air/fluid in the cavity 14/humidity-controlled environment. In particular, the adsorbent material 24 can adsorb excess moisture from the air/fluid positioned in, or in fluid communication with, the cavity 14.

Having described the invention in detail and by reference to the various embodiments, it should be understood that modifications and variations thereof are possible without departing from the scope of the claims of the present application.

## Claims

1. An adsorbent system comprising a valve assembly, the valve assembly including:
a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment;
an adsorbent material in the channel, wherein the channel and adsorbent material are configured such that fluid flowing through the channel is flowable over the adsorbent material; and
a single valve membrane positioned at or adjacent to, or in fluid communication with, the first end of the channel, wherein the valve membrane is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment, wherein at least one of: 1) the first and second predetermined pressure differentials are not equal; or 2) the valve membrane is configured to enable a greater volume of fluid to flow through the valve at a given pressure when the valve membrane is in the second open position as compared to when the valve membrane is in the first open position at the given pressure.

2. The system of claim 1 wherein the first and second predetermined pressure differentials are not equal.

3. The system of any preceding claim wherein the valve membrane is configured to enable a greater volume of fluid to flow through the valve at a given pressure when the valve is in the second open position as compared to when the valve is in the first open position at the given pressure.

4. The system of any preceding claim wherein the valve assembly is configured such that when the valve membrane is in the first open position the valve membrane enables fluid to flow from the channel to the ambient environment, and wherein when the valve membrane is in the second open position the valve membrane enables fluid to flow from the ambient environment to the channel.

5. The system of claim 4 wherein the valve membrane is configured to enable a greater volume of fluid to flow through the valve membrane at a given pressure when the valve is in the second open position as compared to when the valve is in the first open position at the given pressure, and wherein the first open position is the greatest extent that the valve membrane can open in a first direction.

6. The system of any preceding claim wherein the valve membrane is configured to move to the first open position when a pressure in the channel is sufficiently high relative to a pressure in the ambient environment, wherein the valve membrane is configured to move to the second open position when the pressure in the channel is sufficiently low relative to the pressure in the ambient environment, and wherein an absolute value of the first predetermined pressure is greater than an absolute value of the second predetermined pressure.

7. The system of any preceding claim wherein the valve membrane is a single unitary structure having at least one slit formed therein, and wherein the valve assembly further includes a first support plate located on a first side of the valve membrane and a second support plate located on a second, opposite side of the valve membrane.

8. The system of claim 7 wherein each support plate has an opening formed therein that is at least partially aligned with the at least one slit of the valve membrane, and wherein the opening of the first support plate has at least one of a different size, shape or positioning relative to the at least one slit, as compared to the opening of the second support plate.

9. The system of claim 7 wherein each support plate has an opening formed therein that is at least partially aligned with the at least one slit of the valve membrane, and wherein the opening of the first support plate located adjacent to the membrane has a smaller surface area as compared to a surface area of the opening of the second support plate located adjacent to the membrane.

10. The system of any one of claims 7 to 9 wherein at least one of the support plates is configured to engage a portion the valve membrane when the valve membrane is in one of the first or second open positions to limit the opening of the valve membrane.

11. The system of claim 10 wherein the other one of the support plates is configured to not engage a deflected portion of the valve membrane when the valve membrane is in the other one of the first or second open positions such that the other one of the support plates does not limit the opening of the valve membrane.

12. The system of preceding claim wherein the valve membrane is biased to a closed position where the valve membrane blocks fluid flow through the valve assembly, and wherein the valve assembly is positioned such that inlet fluid entering the body from the ambient environment passes through the valve membrane before flowing over the adsorbent material, and such that outlet fluid exiting the body to the ambient environment passes through the valve membrane before entering the ambient environment.

13. The system of any proceeding claim further comprising the enclosure, wherein the body is coupled to the enclosure such that the first end of the channel is in selective fluid communication with the ambient environment the second end of the channel is in fluid communication with the humidity-controlled environment, wherein the enclosure includes at least one device positioned in the cavity configured such that periodic operation of the device generates sufficient heat to cause regeneration of the adsorbent material.

14. An adsorbent system comprising a valve assembly, the valve assembly including:
a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment;
an adsorbent material in the channel, wherein the channel and adsorbent material are configured such that fluid flowing through the channel is flowable over the adsorbent material;
a valve membrane positioned at or adjacent to, or in fluid communication with, the first end of the channel, wherein the valve membrane has at least one slit and is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment;
a first support plate located on a first side of the valve membrane; and
a second support plate located on a second, opposite side of the valve membrane, wherein the valve membrane is configured such that at least one of: 1) a portion of the valve membrane contacts at least one of the first or second support plates when the valve membrane is in one of the first or second open positions to limit at least one of an extent of an opening of the valve membrane; or 2) at least one of the first or second support plates contacts a flap of the membrane when the membrane is in a closed position, to adjust an opening pressure of the membrane in at least one of the first or second open positions.

15. An adsorbent system comprising a valve assembly, the valve assembly including:
a body having or defining a channel therein, wherein the valve assembly is configured to be coupled to an enclosure having a cavity defining a humidity-controlled environment such that a first end of the channel is in selective fluid communication with an ambient environment and a second end of the channel is in fluid communication with the humidity-controlled environment;
an adsorbent material in the channel, wherein the channel and adsorbent material are configured such that fluid flowing through the channel is flowable over the adsorbent material;
a valve membrane positioned at or adjacent to, or in fluid communication with, the first end of the channel, wherein the valve membrane has at least one slit and is configured to move to a first open position when there is a first predetermined pressure differential between the channel and the ambient environment, and wherein the valve membrane is configured to move to a second open position, in an opposite direction compared to when the valve membrane is in the first open position, when there is a second predetermined pressure differential between the channel and the ambient environment;
a first support plate located on a first side of the valve membrane, the first support plate having an opening at least partially aligned with the at least one slit; and
a second support plate located on a second, opposite side of the valve membrane, the second support plate having an opening at least partially aligned with the at least one slit, wherein the opening of the second support plate has at least one of: 1) a different size compared to the opening of the first support plate; or 2) a different shape compared to the opening of the first support plate; or 3) a different positioning, relative to the at least one slit, compared to the opening of the first support plate.
